Europäisches Patentamt

European Patent Office

Office européen des brevets

(11) Veröffentlichungsnummer: **0 327 793**
**A2**

## (12) EUROPÄISCHE PATENTANMELDUNG

(21) Anmeldenummer: **89100040.8**

(22) Anmeldetag: **03.01.89**

(51) Int. Cl.⁴: **B60J 1/00**

(30) Priorität: **11.02.88 DE 3804218**

(43) Veröffentlichungstag der Anmeldung:
**16.08.89 Patentblatt 89/33**

(84) Benannte Vertragsstaaten:
**DE ES FR GB IT**

(71) Anmelder: **ROBERT BOSCH GMBH**
**Postfach 10 60 50**
**D-7000 Stuttgart 10(DE)**

(72) Erfinder: **Schalajda, Peter, Dipl.-Phys.**
**Eichrodtstrasse 4**
**D-7630 Lahr(DE)**
Erfinder: **Winner, Hermann, Dr. Dipl.-Phys.**
**Im Mehl 3**
**D-7500 Karlsruhe 41(DE)**
Erfinder: **Zabler, Erich, Dr. Dipl.-Ing.**
**Brunhildstrasse 11**
**D-7513 Stutensee 1(DE)**

(54) **Verbundglasscheibe.**

(57) Es wird eine Verbundglasscheibe vorgeschlagen, die zum Abdecken von Öffnungen in einer Kraftfahrzeugkarosserie dient. Die Verbundglasscheibe umfaßt eine äußere und eine innere Teilscheibe sowie zwischen den beiden Teilscheiben angeordnete, diese mit Abstand voneinander haltende, transparente Haltemittel. Um auf einfache Weise eine Reflexionsfläche für Impulse zum Messen von Feuchtigkeit auf der Außenfläche der äußeren Teilscheibe zu erhalten, sparen die Haltemittel einander zugewandte und einander gegenüberliegende Bereiche der Teilscheiben aus, so daß sich ein allseitig geschlossener Raum ergibt.

FIG.2

EP 0 327 793 A2

## Verbundglasscheibe

### Stand der Technik

Die Erfindung geht aus von einer Verbundglasscheibe nach der Gattung des Hauptanspruchs. Es ist schon eine Verbundglasscheibe bekannt, bei der die Reflexionsflächen durch die Grenzflächen Glas/Luft gebildet sind. Diese Grenzflächen reflektieren die Impulse zum Messen von Feuchtigkeit einwandfrei, solange dort keine Feuchtigkeit auftritt. Regen auf der Außenfläche der Außenscheibe bzw. Kondensat auf der Innenfläche der Innenscheibe führen bei der Reflexion zu Verlusten durch Transmission. Diese Verluste führen gemessen und ausgewertet zum Beispiel zur Inbetriebsetzung eines Scheibenwischers.

Die Nachteile bei Kondensatbildung liegen auf der Hand, weil dadurch der auf der Außenseite der äußeren Teilscheibe liegende Wischer möglicherweise unnötig in Betrieb gesetzt wird, obwohl die Außenseite der äußeren Teilscheibe gar nicht vom Regen benetzt ist.

### Vorteile der Erfindung

Die erfindungsgemäße Verbundglasscheibe mit den kennzeichnenden Merkmalen des Hauptanspruchs hat demgegenüber den Vorteil, daß durch den Raum zwischen den beiden Teilscheiben auf einfache Weise eine vollwertige Reflexionsfläche gebildet ist, die nicht durch äußere Einflüsse wie z. B. Kondensatbildung zu Fehlsteuerungen des Scheibenwischers Anlaß gibt.

Durch die in den Unteransprüchen aufgeführten Maßnahmen sind vorteilhafte Weiterbildungen und Verbesserungen der im Hauptanspruch angegebenen Verbundglasscheibe möglich.

### Zeichnung

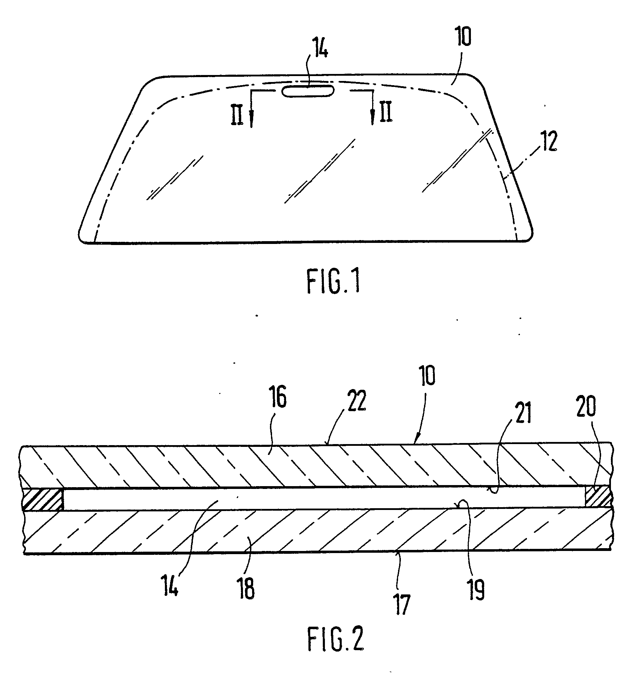

Ein Ausführungsbeispiel der Erfindung ist in der Zeichnung dargestellt und in der nachfolgenden Beschreibung näher erläutert. Es zeigen Figur 1 eine prinzipdarstellung einer Verbundglasscheibe in Draufsicht und Figur 2 einen Teilschnitt durch die Verbundglasscheibe gemäß Figur 1, entlang der Linie II-II, in vergrößerter Darstellung.

### Beschreibung des Ausführungsbeispiels

Eine in der Figur 1 in Draufsicht gezeigte Verbundglasscheibe 10, die beispielsweise als Windschutzscheibe eines Kraftfahrzeuges dient, weist ein von einem nicht dargestellten Scheibenwischer bestrichenes, strichpunktiert begrenztes Wischfeld 12 auf, das wesentliche Bereiche der Windschutzscheibe 10 erfaßt. Innerhalb des vom Wischer bestrichenen Feldes 12 befindet sich ein zwischen den beiden Teilscheiben der Verbundglasscheibe 10 angeordneter Raum 14, der anhand von Figur 2 näher erläutert werden soll. Die Verbundglasscheibe 10 weist eine innere Teilscheibe 16 und eine äußere Teilscheibe 18 auf, die durch als Klebefolie 20 ausgebildete, transparente Haltemittel mit Abstand voneinander und in bezug aufeinander festgehalten werden. Der Raum 14 ist dadurch gebildet, daß in dem in Figur 1 gezeigten Bereich die Klebefolie 20 über einen langgestreckten Abschnitt durchbrochen ist. Es ergibt sich somit ein allseitig geschlossener Raum 14, der durch die beiden Teilscheiben 16, 18 und die Klebefolie 20 umschlossen ist. Der Raum 14 kann beispielsweise gasgefüllt oder auch evakuiert sein, so daß im Raum 14 im Anwendungstemperaturbereich kein Kondensat gebildet wird.

Auf diese Weise wird zwischen der Innenseite 19 der äußeren Teilscheibe 18 und dem Raum 14 eine einwandfreie und störungssichere Reflexionsfläche geschaffen, so daß eine Betätigung des Scheibenwischers nur noch dann erfolgen kann, wenn die äußere Teilscheibe 18 auf ihrer Außenseite 17 benetzt wird. Die Meßimpulse, die zwischen den beiden Grenzflächen 17 und 19 reflektiert werden, können in an sich bekannter Weise über einen entsprechend präparierten Pfad in die äußere Teilscheibe 18 gelangen. Es ist jedoch aber auch denkbar, einen geeigneten Sender sowie einen geeigneten Empfänger direkt in den Raum l4 unterzubringen.

Zusätzlich wird auf diese Weise auch zwischen der Innenseite 21 der inneren Teilscheibe 16 und dem Raum 14 eine einwandfreie und störungssichere Reflexionsfläche geschaffen, so daß Feuchtigkeit auf der Scheibeninnenseite 22 unabhängig von Feuchtigkeit auf der Scheibenaußenseite 17 erkannt werden kann.

Auch ist es denkbar, den Raum 14 in Teilbereiche aufzuteilen, welche mit Materialien gefüllt sein können, die bestimmte optische Eigenschaften besitzen, wie zum Beispiel hohes Reflexions- oder hohes Absorptionsvermögen.

### Ansprüche

1. Verbundglasscheibe für den Fahrgastraum von Kraftfahrzeugen mit einer äußeren und einer inneren Teilscheibe sowie mit zwischen den beiden Teilscheiben angeordneten, diese mit Abstand voneinander haltenden, transparenten Haltemitteln, dadurch gekennzeichnet, daß die Haltemittel (20) einander zugewandte und einander gegenüberliegende Bereiche der Teilscheiben (16 und 18) aussparen, so daß sich ein allseitig geschlossener Raum (14) ergibt.

2. Verbundglasscheibe nach Anspruch 1, dadurch gekennzeichnet, daß die Haltemittel durch eine Klebefolie (20) gebildet sind.

3. Verbundglasscheibe nach einem der Ansprüche 1 oder 2, dadurch gekennzeichnet, daß die von den Haltemitteln (20) ausgesparten Bereiche langgestreckt ausgebildet sind.

4. Verbundglasscheibe nach einem der Ansprüche 1 bis 3, dadurch gekennzeichnet, daß der Raum (14) innerhalb des von einem Scheibenwischer überstrichenen Bereichs (12) der Scheibe (10) angeordnet ist.

5. Verbundglasscheibe nach einem der Ansprüche 1 bis 4, dadurch gekennzeichnet, daß der Raum (14) gasgefüllt ist.

6. Verbundglasscheibe nach einem der Ansprüche 1 bis 4, dadurch gekennzeichnet, daß der Raum (14) evakuiert ist.

FIG.1

FIG.2